# EUROPEAN PATENT APPLICATION

(11) **EP 3 552 935 A1**
(43) Date of publication of application: **16.10.2019**
(21) Application number: 18193734.3
(22) Date of filing: 11.09.2018
(51) Int. Cl.: B62J 17/04, B62J 99/00, G02B 27/01

(54) **HANGING-TYPE HEAD-UP DISPLAY DEVICE**

(30) Priority: 13.04.2018 TW 107204844 U
(71) Applicant: Lin, Sheng-Yueh, Taipei City 106 (TW)
(72) Inventor: LIN, Sheng-Yueh, Taipei City 106 (TW); TSAI, Ke-Yu, Taipei City 106 (TW)
(74) Representative: De Anna, Pier Luigi

(57) **Abstract**

A hanging-type head-up display device comprises a projection device (1) and an extension portion (2). The extension portion is connected to a support (4) that is connected to a front end of a head of a motorcycle. The projection device includes a projection camera (323) for projecting an image in a forward direction away from the head of the motorcycle onto a display screen (91) provided in front of the head of the motorcycle.

## Description

### FIELD OF THE INVENTION

The present invention relates to a hanging-type head-up display device, and more particularly, to a hanging-type head-up display device installed at the front of a motorcycle and capable of projecting an image onto a display screen to be displayed.

### BACKGROUND OF THE INVENTION

Head-up displays equipped in cars are convenient in that they allow drivers to see driving information, such as information about current speed, navigation details, speed cameras, warning signs, and so on, without having to divert their attention elsewhere. Mass-produced head-up displays designed specifically for motorcycles are also available in the market, which generally comes in a combination of separate units, where a host device is typically installed on a biker's helmet, and a display screen is secured to an inner upper edge onto which images can be projected by the head-up display. Alternatively, a suspended window can be projected 50∼90 cm in front of the helmet. As such, information related to navigation, incoming calls, weather, and so on from a mobile phone can be easily viewed by the biker.

Another type of head-up displays for motorcycles may operate in cooperation with mobile phones to directly display information such as incoming calls and navigation details on the windshields. Head-up-display-equipped windshields can be mounted on the head of a vehicle (such as a scooter or a motorbike) and can be in connection with a mobile phone when in use in order to display important information of the mobile phone. In addition, windshields have the benefit of lessening wind pressure, so as to reduce the tiredness of bikers on long journey.

### SUMMARY OF THE INVENTION

However, the aforementioned design of installing the projection host device and the display screen on a helmet produces electromagnetic or other radiations that may be unhealthy to the body as it is in close proximity to the biker's brain. On the other hand, the specially-designed windshields tailored to work in cooperation with mobile phones may have limited application as the design cannot be flexibly applied to ordinary windshields. This increases the repurchasing and replacement cost.

In view of this, the present invention is thus provided by the inventor through years of continuous development and improvements to overcome the shortcomings in the prior art.

One object of the present invention is to provide a hanging-type head-up display device to overcome the problem regarding the health concern of wearing a projection host device and a display screen on the helmet, and the difficulty on the adaptability of the windshields that are specifically tailored to the mobile phones to conventional windshields. The present invention is capable of providing sufficient safety distance in use, so that a biker when riding a motorcycle equipped with the head-up display device of the present invention can optionally use the head-up display device. The present invention also can be fitted onto standard windshields, so as to reduce the repurchasing and replacement cost.

In order to achieve the above object, the present invention provides a hanging-type head-up display device comprising a projection device and an extension portion, wherein the extension portion is connected to a support that is connected to a front end of a head of a motorcycle, and the projection device includes a projection camera for projecting an image in a forward direction away from the head of the motorcycle onto a display screen in front of the head of the motorcycle.

In implementation, the projection device further includes an adapter and a main body, the extension portion is formed by having one end of the adapter extended and bent at an angle, one end of the extension portion is connected to the support, one side of the adapter is provided with a first latching portion; the projection camera is provided at a front end of the main body, and one side of the main body is provided with a second latching portion corresponding to the first latching portion for connecting the adapter with the main body.

In implementation, the extension portion includes a first positioning member and a second positioning member, the first positioning member includes a first positioning portion, and the second positioning member includes a second positioning portion corresponding to the first positioning portion for being in connection to the support.

In implementation, the front end of the extension portion is connected to the display screen, so that the display screen is positioned in front of the projection camera and spaced from the projection camera in a projection distance.

In implementation, the hanging-type head-up display device of the present invention further comprises a windshield provided at the front end of the head of the motorcycle, and the display screen is provided on the windshield.

In implementation, the support includes an intermediate crossbar and a left bar and a right bar symmetrically disposed on two ends of the intermediate crossbar, a rear end of the left bar is connected to a left side of the head of the motorcycle while a rear end of the right bar is connected to a right side of the head of the motorcycle.

The present invention is described below in further details to facilitate understanding of the present invention.

### BRIEF DESCRIPTION OF THE DRAWINGS

FIG. 1 is an exploded view of a hanging-type head-up display device in accordance with a first embodiment of the present invention.
FIG. 2 is a perspective view of the hanging-type head-up display device in accordance with the first embodiment of the present invention.
FIG. 3 is a cross-sectional view along line A-A' of FIG. 2.
FIG. 4 is a schematic view showing the use of the hanging-type head-up display device in accordance with the first embodiment of the present invention when in use.
FIG. 5 is a perspective view of the hanging-type head-up display device in accordance with a second embodiment of the present invention.

### DETAILED DESCRIPTION OF THE EMBODIMENTS

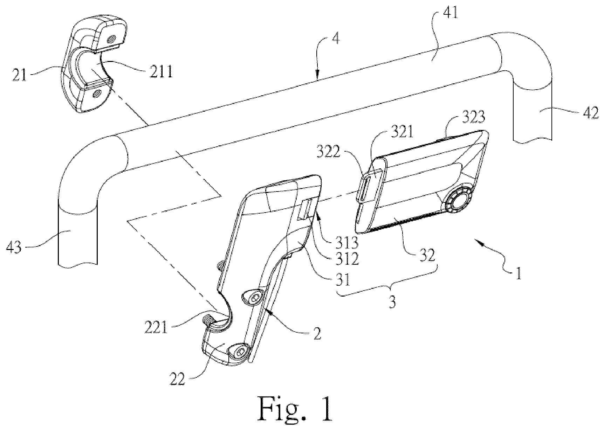

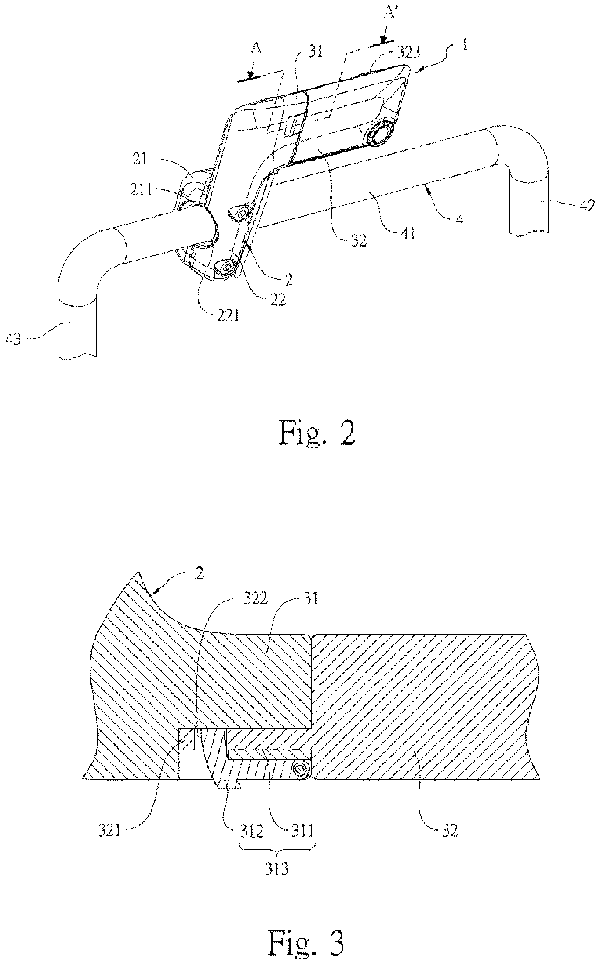

Referring to FIGs. 1 to 3, a hanging-type head-up display device 1 in accordance with a first embodiment of the present invention comprises an extension portion 2 and a projection device 3. When in use, the hanging-type head-up display device of the present invention is installed at the front of the head of a motorcycle, wherein the direction a biker is facing when riding the motorcycle is defined as the front side of the motorcycle, and the direction the biker's back is facing is defined as the back side of the motorcycle, and the left and right sides of the motorcycle are defined in relation to the orientation mentioned above.

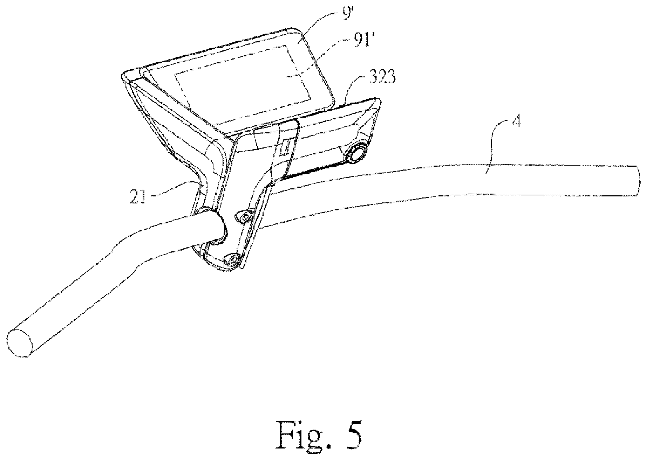

The extension portion 2 and the projection device 3 are generally arranged in an "L" shape. The projection device 3 includes an adapter 31 and a main body 32. The extension portion 2 is formed by having one end of the adapter 31 extended and bent downwards at an angle. In implementation, the extension portion 2 also can be formed by having one end of the adapter 31 extended and bent horizontally at an angle. The extension portion 2 includes a first positioning member 21 and a second positioning member 22. A semicylindrical groove is provided at a side face of the first positioning member 21. The groove is used as a first positioning portion 211. Another semicylindrical groove corresponding to the first positioning portion 211 is provided at a side face of the second positioning member 22 as a second positioning portion 221. The first positioning portion 211 and the second positioning portion 221 are connected with each other to fit around an intermediate crossbar 41 of a support 4. The support 4 includes the intermediate crossbar 41, a left bar 42 and a right bar 43. The left bar 42 and the right bar 43 are disposed symmetrically on the left and right ends of the intermediate crossbar 41 respectively. The rear end of the left bar 42 is fastened onto the lower left side of the head of the motorcycle, and the rear end of the right bar 43 is fastened onto the lower right side of the head of the motorcycle. In implementation, the support 4 can be a handle crossbar of a scooter or a motorbike as shown in FIG. 5. Moreover, one end of the adapter 31 is provided with a slot 311 and a latch component 312 that reverts back to its original position after being turned. The slot 311 and the latch component 312 together form a first latching portion 313.

The main body 32 is generally in the shape of an elongated plate. A front face of the main body 32 is provided with a projection camera 323 for projecting an image in a forward direction away from the head of the motorcycle. The source of this image signal comes from a mobile phone or directly from the motorcycle itself. One side of the main body 32 is provided with a plate that is corresponding to the first latching portion 313 and has a positioning hole 322 therein. The plate is used as a second latching portion 321. When the second latching portion 321 is inserted into the slot 311 of the adapter 31, the latch component 312 can be held in place within the positioning hole 322 of the plate, so as to fasten the main body 32 to the adapter 31. The main body 32 can be removed from the adapter 31 by flicking the latch component 312.

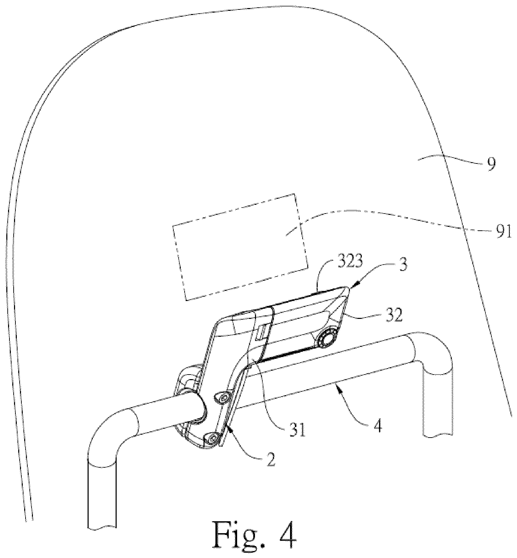

As such, as shown in FIG. 4, when a windshield 9 having a display screen 91 formed thereon is provided at the front of the head of the motorcycle, and the extension portion 2 of the projection device 3 is connected to the support 4, an image projected forward by the projection camera 323 can be displayed on the display screen 91 that can be a reflector or the like in order to display driving information, such as the speed, navigation details, speed cameras, warning signs, and so on. Meanwhile, the biker can see through the portion of the windshield 9 where there is no display screen 91, or above the top of the windshield 9 to view things that are in front of the motorcycle with ease. The biker is also able to instantly view the information displayed on the display screen 91 by lowering his sight slightly without influencing his riding. When the biker is leaving the motorcycle, he may then remove the main body 32 from the adapter 31 and take the main body 32 with him to ensure the security of the information and the equipment.

Referring to FIG. 5, a hanging-type head-up display device 1 in accordance with a second embodiment of the present invention is shown, which is different from the first embodiment in that: the front end of the first positioning member 21 of the extension portion 2 is connected with a display screen 91'that is positioned in front of the projection camera 323 and is spaced from the projection camera 323 in a projection distance. Displaying the driving information also can be achieved by this alternative implementation.

Based on the above disclosure, the present invention has following advantages:
1. There is sufficient safety distance between the display screen, the main body of the present invention and the biker, so as to effectively prevent electromagnetic or other radiations from harming the body and thus ensure safety in use.
2. The present invention allows the biker to clearly see objects in front of him or selectively lowering his sight to use the head-up display device when riding a motorcycle, so as to ensure the safety of the driving.
3.The present invention can be selectively used in conjunction with a conventional windshield, so as to reduce the re-purchasing and replacement cost.
4.The main body and the adapter of the present invention are detachably fastened with each other, so that the main body can be separately taken by the user once the biker is leaving the vehicle to ensure the security of the equipment and the information contained therein.

In conclusion, in accordance with the disclosure above, the present invention achieves the anticipated object by providing a hanging-type head-up display device that is able to ensure the safety of use, the safety of driving, and security of the equipment and information, while reduce the repurchasing and replacement cost. It is novel and has industrial use.

## Claims

1. A hanging-type head-up display device, comprising a projection device and an extension portion, the extension portion being connected to a support that is connected to a front end of a head of a motorcycle, and the projection device including a projection camera for projecting an image in a forward direction away from the head of the motorcycle onto a display screen provided in front of the head of the motorcycle.

2. The hanging-type head-up display device of claim 1, wherein the support includes an intermediate crossbar and a left bar and a right bar symmetrically disposed on two ends of the intermediate crossbar, a rear end of the left bar is connected to a left side of the head of the motorcycle, and a rear end of the right bar is connected to a right side of the head of the motorcycle.

3. The hanging-type head-up display device of claim 1, wherein the projection device further includes an adapter and a main body, the extension portion is formed by having one end of the adapter extended and bent at an angle, one end of the extension portion is connected to the support, one side of the adapter is provided with a first latching portion; the projection camera is provided at a front end of the main body, one side of the main body is provided with a second latching portion corresponding to the first latching portion for connecting the adapter with the main body.

4. The hanging-type head-up display device of claim 3, wherein the support includes an intermediate crossbar and a left bar and a right bar symmetrically disposed on two ends of the intermediate crossbar, a rear end of the left bar is connected to a left side of the head of the motorcycle, and a rear end of the right bar is connected to a right side of the head of the motorcycle.

5. The hanging-type head-up display device of claim 3, wherein the extension portion includes a first positioning member and a second positioning member, the first positioning member includes a first positioning portion, and the second positioning member includes a second positioning portion corresponding to the first positioning portion for being in connection with the support.

6. The hanging-type head-up display device of claim 5, wherein the support includes an intermediate crossbar and a left bar and a right bar symmetrically disposed on two ends of the intermediate crossbar, a rear end of the left bar is connected to a left side of the head of the motorcycle, and a rear end of the right bar is connected to a right side of the head of the motorcycle.

7. The hanging-type head-up display device of claim 1, wherein the front end of the extension portion is connected to the display screen, so that the display screen is positioned in front of the projection camera and spaced from the projection camera in a projection distance.

8. The hanging-type head-up display device of claim 7, wherein the support includes an intermediate crossbar and a left bar and a right bar symmetrically disposed on two ends of the intermediate crossbar, a rear end of the left bar is connected to a left side of the head of the motorcycle, and a rear end of the right bar is connected to a right side of the head of the motorcycle.

9. The hanging-type head-up display device of claim 1, further comprising a windshield provided at the front end of the head of the motorcycle, and the display screen is located on the windshield.

10. The hanging-type head-up display device of claim 9, wherein the support includes an intermediate crossbar and a left bar and a right bar symmetrically disposed on two ends of the intermediate crossbar, a rear end of the left bar is connected to a left side of the head of the motorcycle, and a rear end of the right bar is connected to a right side of the head of the motorcycle.
